# EUROPEAN PATENT APPLICATION

(11) **EP 4 746 014 A1**
(43) Date of publication of application: **20.05.2026**
(21) Application number: 23945053.9
(22) Date of filing: 10.07.2023
(51) Int. Cl.: H01H 33/53, H01H 33/56, H01H 33/662, H01H 33/666

(54) **VACUUM CIRCUIT BREAKER**

(71) Applicant: MITSUBISHI ELECTRIC CORPORATION, Chiyoda-ku Tokyo 100-8310 (JP)
(72) Inventor: SUGINO, Kazuki, Tokyo 100-8310 (JP)
(74) Representative: Witte, Weller & Partner Patentanwälte mbB
(86) International application number: PCT/JP2023/025463
(87) International publication number: WO 2025/013173

(57) **Abstract**

A vacuum circuit breaker (50) includes: an arc-extinguishing chamber (23) including vacuum valves (4a, 4b), a link mechanism (9), and a link mechanism case (94), the link mechanism (9) transmitting a driving force to each of the vacuum valves (4a, 4b), the link mechanism case (94) covering the link mechanism (9); a tank (1) having a cylindrical shape; and a support insulator (22) having a cylindrical shape, the support insulator (22) supporting the arc-extinguishing chamber (23) in the tank (1), wherein each of the vacuum valves (4a, 4b) includes a vacuum vessel (26a, 26b) and a bellows (25a, 25b), a space communicating with spaces inside the bellows (25a, 25b), a space inside the link mechanism case (94), and a space inside the support insulator (22) is filled with insulating gas at a gas pressure lower than a gas pressure in a space located not inside any of the vacuum vessels (26a, 26b), the link mechanism case (94), and the support insulator (22) but inside the tank (1), and the support insulator (22) is placed in such a way as to extend from the link mechanism case (94) horizontally or upward with respect to a horizontal.

## Description

### Field

The present disclosure relates to a double-break vacuum circuit breaker including two vacuum valves for interrupting current in a vacuum.

### Background

Conventionally, a vacuum circuit breaker called a double-break vacuum circuit breaker in which two vacuum valves for interrupting current in a vacuum are provided in a tank is known as a type of circuit breaker for interrupting current. In each vacuum valve, a movable electrode and a fixed electrode are placed inside a vacuum vessel. Current is passed in a closed state in which the movable electrode is in contact with the fixed electrode, and current is interrupted in a cutoff state in which the movable electrode is separated from the fixed electrode. The vacuum circuit breaker includes an insulating rod that receives a driving force generated by an operating device installed below a grounded tank, and a link mechanism that transmits the driving force received by the insulating rod to the movable electrode of each vacuum valve. As a result of transmission of the driving force to the movable electrode by the link mechanism, the movable electrode moves to switch between the closed state and the cutoff state.

The movable electrode is placed at one end portion of a movable lead protruding from one end portion of the vacuum vessel to the outside of the vacuum vessel. The vacuum vessel and the movable lead are connected by a bellows having a pleated cylindrical shape. According to expansion and contraction of the bellows, the movable electrode can move in the vacuum vessel while a vacuum is maintained in the vacuum vessel.

In such a vacuum circuit breaker, a space inside the vacuum vessel and outside the bellows is a vacuum space. Meanwhile, in a space inside the bellows, there is an insulating gas with which the grounded tank is filled. Therefore, there arises a difference in pressure between the inside and outside of the bellows. This causes a decrease in durability of the bellows.

Patent Literature 1 discloses a vacuum circuit breaker including a cylindrical support insulator that supports, in a tank, an arc-extinguishing chamber including a vacuum valve, a link mechanism, and a link mechanism case covering the link mechanism. In the vacuum circuit breaker disclosed in Patent Literature 1, a space inside the link mechanism case and a space inside the support insulator communicate with a space inside the bellows, and are hermetically isolated. Therefore, in the vacuum circuit breaker disclosed in Patent Literature 1, a space in the tank is divided into three spaces including a space inside the tank and outside the vacuum vessel, a space inside the vacuum vessel and outside the bellows, and a space communicating with the space inside the bellows. The vacuum circuit breaker disclosed in Patent Literature 1 reduces a difference in pressure between the inside and outside of the bellows to improve the durability of the bellows by making the pressure of insulating gas filling the space communicating with the space inside the bellows lower than the pressure of insulating gas filling the space inside the tank and outside the vacuum vessel.

### Citation List

### Patent Literature

Patent Literature 1: Japanese Patent Application Laid-open No. 2016-126952

### Summary of Invention

### Problem to be solved by the Invention

However, since the vacuum circuit breaker disclosed in Patent Literature 1 has a structure in which the pressure of insulating gas inside the support insulator is lowered, the support insulator needs to be lengthened in an axial direction so as to ensure a sufficient insulation distance as compared with a vacuum circuit breaker having a structure in which the inside of a support insulator is filled with a high-pressure insulating gas. Therefore, as a result of lengthening the cylindrical support insulator in the axial direction, the arc-extinguishing chamber is disposed at a higher position. Thus, the vacuum circuit breaker disclosed in Patent Literature 1 has a problem in that the center of gravity of the entire device is heightened to deteriorate aseismic performance.

The present disclosure has been made in view of the above, and an object of the present disclosure is to provide a vacuum circuit breaker that achieves both improvement in aseismic performance and improvement in durability of a bellows.

### Means to Solve the Problem

In order to solve the above-described problem and achieve the object, a vacuum circuit breaker according to the present disclosure includes: an arc-extinguishing chamber including two vacuum valves, a link mechanism, and a link mechanism case, the link mechanism transmitting a driving force to each of the vacuum valves, the driving force being received from an operating device, the link mechanism case covering the link mechanism; a tank having a cylindrical shape, the tank housing the arc-extinguishing chamber; and a support insulator having a cylindrical shape, the support insulator supporting the arc-extinguishing chamber in the tank, one end portion of the support insulator being fixed to the link mechanism case. Each of the two vacuum valves includes a movable electrode, a fixed electrode, a vacuum vessel, a movable lead, and a bellows, the vacuum vessel housing the movable electrode and the fixed electrode, the movable electrode being placed at one end portion of the movable lead, an opposite end portion of the movable lead protruding outside the vacuum vessel from one end portion of the vacuum vessel, the bellows having a pleated cylindrical shape, the bellows being capable of being expanded and contracted, the bellows connecting the one end portion of the vacuum vessel and the movable lead. A space inside the tank is divided into a first space, second spaces, and a third space, the first space being located not inside any of the vacuum vessels, the link mechanism case, and the support insulator but inside the tank, the second spaces being spaces inside the vacuum vessels and outside the bellows, the third space communicating with each of spaces inside the bellows, a space inside the link mechanism case, and a space inside the support insulator. The first space is filled with insulating gas. The second spaces are vacuum spaces. The third space is filled with the insulating gas at a gas pressure lower than a gas pressure in the first space. The support insulator is placed in such a way as to extend from the link mechanism case horizontally or upward with respect to the horizontal.

### Effects of the Invention

The present disclosure achieves an effect of obtaining a vacuum circuit breaker that achieves both improvement in aseismic performance and improvement in durability of a bellows.

### Brief Description of Drawings

FIG. 1 is a diagram illustrating a configuration of a vacuum circuit breaker according to a first embodiment.
FIG. 2 is an enlarged partial cross-sectional view of the vacuum circuit breaker according to the first embodiment.
FIG. 3 is a schematic diagram of a vacuum circuit breaker according to a modification of the first embodiment.
FIG. 4 is an enlarged partial cross-sectional view of a vacuum circuit breaker according to a second embodiment.
FIG. 5 is an enlarged partial cross-sectional view of a vacuum circuit breaker according to a third embodiment.

### Description of Embodiments

Hereinafter, vacuum circuit breakers according to embodiments will be described in detail with reference to the drawings.

### First Embodiment.

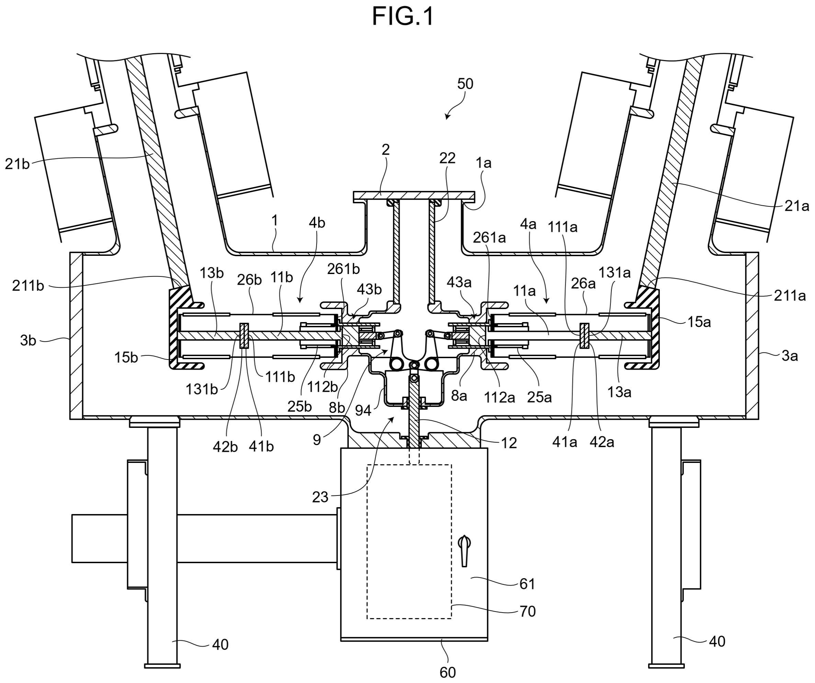

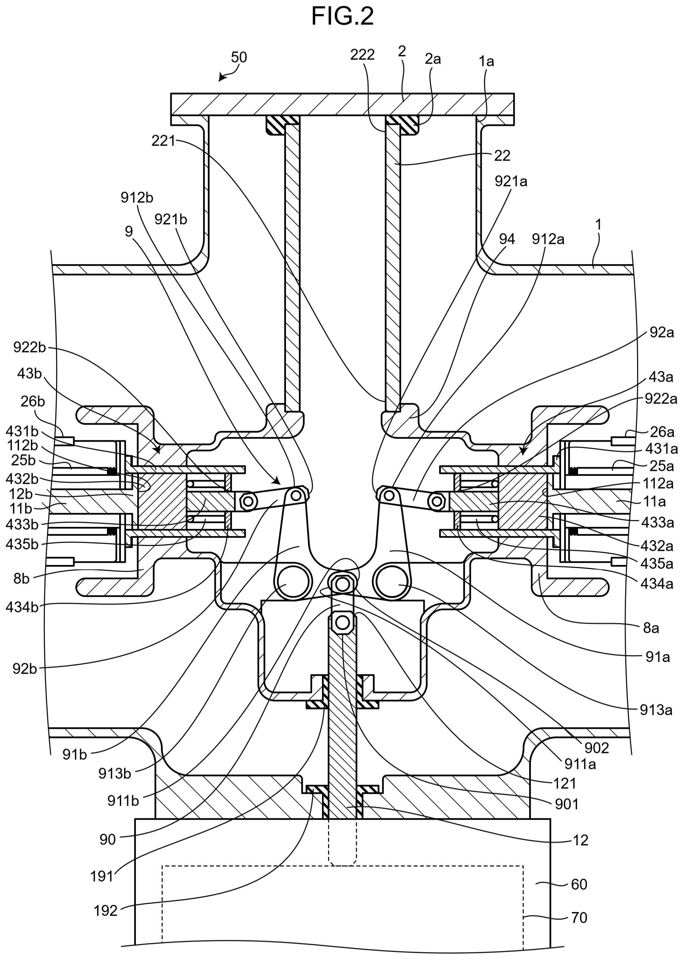

FIG. 1 is a diagram illustrating a configuration of a vacuum circuit breaker according to a first embodiment. FIG. 2 is an enlarged partial cross-sectional view of the vacuum circuit breaker according to the first embodiment. Note that FIGS. 1 and 2 illustrate cross sections of a tank 1 and constituent elements disposed inside the tank 1. A vacuum circuit breaker 50 according to the first embodiment includes the tank 1 and two vacuum valves 4a and 4b. The tank 1 has a cylindrical shape, and is filled with insulating gas. The vacuum valves 4a and 4b are insulated and supported in the tank 1. The vacuum valve 4a includes a movable electrode 41a and a fixed electrode 42a. The vacuum valve 4b includes a movable electrode 41b and a fixed electrode 42b. In addition, the vacuum circuit breaker 50 includes an insulating rod 12, a link mechanism 9, and a link mechanism case 94. The insulating rod 12 is connected to an operating device 70 housed in an operation box 60. The link mechanism 9 receives, from the insulating rod 12, a driving force generated by the operating device 70, and transmits the driving force to the movable electrodes 41a and 41b. The link mechanism case 94 covers the link mechanism 9. The insulating rod 12 moves in a direction perpendicular to a longitudinal direction of the tank 1.

An arc-extinguishing chamber 23 including the vacuum valves 4a and 4b, the link mechanism 9, and the link mechanism case 94 is supported by a support insulator 22 in such a way as to be disposed on a central axis of the tank 1.

The tank 1 is installed above the operation box 60 by a support structure 40. Both end portions of the tank 1 are closed by side plates 3a and 3b. Furthermore, a hatch 1a is formed at an upper center portion of the tank 1. The hatch 1a is a protruding portion having an opening. The opening in the hatch 1a is closed by a cap 2. The operation box 60 is provided with a door 61 for maintenance work.

The vacuum valve 4a includes a vacuum vessel 26a, a movable lead 11a, a fixed lead 13a, and a bellows 25a. The movable lead 11a is electrically connected to the movable electrode 41a. The fixed lead 13a is electrically connected to the fixed electrode 42a. The bellows 25a is capable of being expanded and contracted, and connects one end face 261a of the vacuum vessel 26a with the movable lead 11a. The movable electrode 41a is placed at one end portion 111a of the movable lead 11a. The fixed electrode 42a is placed at one end portion 131a of the fixed lead 13a. In the vacuum valve 4a, the movable electrode 41a is movable, and the movable electrode 41a moves when switching between a cutoff state and a closed state.

The vacuum vessel 26a houses the movable electrode 41a, the fixed electrode 42a, and the fixed lead 13a. The movable lead 11a protrudes outward from the one end face 261a of the vacuum vessel 26a. The bellows 25a connects the vacuum vessel 26a and the movable lead 11a. The bellows 25a expands in the closed state in which a first contact formed by the movable electrode 41a and the fixed electrode 42a is closed, and contracts in the cutoff state in which the first contact formed by the movable electrode 41a and the fixed electrode 42a is open.

The vacuum valve 4b includes a vacuum vessel 26b, a movable lead 11b, a fixed lead 13b, and a bellows 25b. The movable lead 11b is electrically connected to the movable electrode 41b. The fixed lead 13b is electrically connected to the fixed electrode 42b. The bellows 25b is capable of being expanded and contracted, and connects one end face 261b of the vacuum vessel 26b with the movable lead 11b. The movable electrode 41b is placed at one end portion 111b of the movable lead 11b. The fixed electrode 42b is placed at one end portion 131b of the fixed lead 13b. In the vacuum valve 4b, the movable electrode 41b is movable, and the movable electrode 41b moves when switching between the cutoff state and the closed state.

The vacuum vessel 26b houses the movable electrode 41b, the fixed electrode 42b, and the fixed lead 13b. The movable lead 11b protrudes outward from the one end face 261b of the vacuum vessel 26b. The bellows 25b connects the vacuum vessel 26b and the movable lead 11b. The bellows 25b expands in the closed state in which a second contact formed by the movable electrode 41b and the fixed electrode 42b is closed, and contracts in the cutoff state in which the second contact formed by the movable electrode 41b and the fixed electrode 42b is open.

In addition, the vacuum circuit breaker 50 includes a fixed-side frame 15a and a fixed-side frame 15b. The fixed-side frame 15a electrically connects a lower end portion 211a of an outer conductor 21a with the fixed lead 13a. The fixed-side frame 15b electrically connects a lower end portion 211b of an outer conductor 21b with the fixed lead 13b.

The fixed electrode 42a of the vacuum valve 4a is electrically connected to the outer conductor 21a via the fixed lead 13a and the fixed-side frame 15a. The fixed electrode 42b of the vacuum valve 4b is electrically connected to the outer conductor 21b via the fixed lead 13b and the fixed-side frame 15b.

As illustrated in FIG. 2, the link mechanism 9 includes a first link 90 having a rod shape, operation levers 91a and 91b having an L-shape in a side view, and second links 92a and 92b having a rod shape. Furthermore, as illustrated in FIG. 2, the link mechanism case 94 includes a movable-side frame 8a and a movable-side frame 8b. The movable-side frame 8a holds the vacuum valve 4a. The movable-side frame 8b holds the vacuum valve 4b. Note that the link mechanism 9 illustrated here is an example of a mechanism that receives, from the insulating rod 12, the driving force generated by the operating device 70 and transmits the driving force to the movable electrodes 41a and 41b, and the link mechanism 9 may have a structure different from the illustrated structure.

A contact 43a made of an electrically conducting material is placed inside the movable-side frame 8a. The contact 43a includes a guide cylindrical portion 431a, a slider portion 432a, a shaft portion 433a, a contact pressure plate 434a, and a contact pressure spring 435a. The guide cylindrical portion 431a has a cylindrical shape. The slider portion 432a is placed inside the guide cylindrical portion 431a in such a way as to be slidable in an axial direction of the guide cylindrical portion 431a. The shaft portion 433a is fixed to the slider portion 432a. The contact pressure plate 434a is fixed inside the guide cylindrical portion 431a at a distance from the slider portion 432a. The contact pressure spring 435a is fixed to the contact pressure plate 434a and the slider portion 432a. The contact pressure plate 434a is a disk-shaped plate with a hole through which the shaft portion 433a passes. An opposite end portion 112a of the movable lead 11a is disposed inside the guide cylindrical portion 431a. In the closed state in which the first contact formed by the movable electrode 41a and the fixed electrode 42a is closed, the slider portion 432a is pressed against the opposite end portion 112a of the movable lead 11a by the contact pressure spring 435a.

A contact 43b made of an electrically conducting material is placed inside the movable-side frame 8b. The contact 43b includes a guide cylindrical portion 431b, a slider portion 432b, a shaft portion 433b, a contact pressure plate 434b, and a contact pressure spring 435b. The guide cylindrical portion 431b has a cylindrical shape. The slider portion 432b is placed inside the guide cylindrical portion 431b in such a way as to be slidable in an axial direction of the guide cylindrical portion 431b. The shaft portion 433b is fixed to the slider portion 432b. The contact pressure plate 434b is fixed inside the guide cylindrical portion 431b at a distance from the slider portion 432b. The contact pressure spring 435b is fixed to the contact pressure plate 434b and the slider portion 432b. The contact pressure plate 434b is a disk-shaped plate with a hole through which the shaft portion 433b passes. An opposite end portion 112b of the movable lead 11b is disposed inside the guide cylindrical portion 431b. In the closed state in which the second contact formed by the movable electrode 41b and the fixed electrode 42b is closed, the slider portion 432b is pressed against the opposite end portion 112b of the movable lead 11b by the contact pressure spring 435b.

The link mechanism case 94 electrically connects the movable lead 11a and the movable lead 11b through the contacts 43a and 43b.

Shaft portions 913a and 913b are provided at bent portions of the operation levers 91a and 91b, respectively. The operation levers 91a and 91b are supported by the link mechanism case 94 such that the operation levers 91a and 91b can rotate about the shaft portions 913a and 913b, respectively.

A lower end portion 901 of the first link 90 is rotatably fixed to an upper end portion 121 of the insulating rod 12. A lower end portion 911a of the operation lever 91a is rotatably fixed to an upper end portion 902 of the first link 90. An upper end portion 912a of the operation lever 91a is rotatably fixed to one end portion 921a of the second link 92a. An opposite end portion 922a of the second link 92a is fixed to the shaft portion 433a of the contact 43a. A lower end portion 911b of the operation lever 91b is rotatably fixed to the upper end portion 902 of the first link 90. An upper end portion 912b of the operation lever 91b is rotatably fixed to one end portion 921b of the second link 92b. An opposite end portion 922b of the second link 92b is fixed to the shaft portion 433b of the contact 43b.

A seal member 191 is placed in a lower portion of the link mechanism case 94 through which the insulating rod 12 penetrates. In addition, a seal member 192 is placed in a lower portion of the tank 1 through which the insulating rod 12 penetrates. As described above, since the seal member 192 is placed between the tank 1 and the operation box 60, gas inside the operation box 60 is not insulating gas but air. Therefore, it is not necessary to perform degassing of the inside of the operation box 60 before opening the door 61 of the operation box 60.

When the vacuum valve 4a is in the closed state, the outer conductor 21a is electrically connected to the link mechanism case 94 through the fixed-side frame 15a, the fixed lead 13a, the fixed electrode 42a, the movable electrode 41a, the movable lead 11a, and the contact 43a. When the vacuum valve 4b is in the closed state, the outer conductor 21b is electrically connected to the link mechanism case 94 through the fixed-side frame 15b, the fixed lead 13b, the fixed electrode 42b, the movable electrode 41b, the movable lead 11b, and the contact 43b.

In addition, when the vacuum valve 4a is in the cutoff state, the outer conductor 21a and the link mechanism case 94 are separated from each other by the first contact formed by the fixed electrode 42a and the movable electrode 41a. Furthermore, when the vacuum valve 4b is in the cutoff state, the outer conductor 21b and the link mechanism case 94 are separated from each other by the second contact formed by the fixed electrode 42b and the movable electrode 41b. Therefore, current flowing between the outer conductor 21a and the outer conductor 21b is interrupted by the opening of the first contact and the second contact. As described above, the vacuum circuit breaker 50 according to the first embodiment is a double-break vacuum circuit breaker that interrupts current by opening and closing the contacts at two points between the outer conductors 21a and 21b.

The support insulator 22 is fixed to the link mechanism case 94, and is placed above the link mechanism case 94. The support insulator 22 has a cylindrical shape, and an opening in one end portion 221 communicates with a space inside the link mechanism case 94. An opposite end portion 222 of the support insulator 22 is disposed at a portion of the hatch 1a provided at an upper center portion of the tank 1, and is closed by the cap 2. The cap 2 is provided with packing 2a, and a gap between the opposite end portion 222 of the support insulator 22 and the cap 2 is closed by the packing 2a.

A space inside the support insulator 22, the space inside the link mechanism case 94, and spaces inside the bellows 25a and 25b communicate with each other to form an isolated space hermetically isolated from the other part in the tank 1. Therefore, a space inside the tank 1 is divided into a first space, second spaces, and a third space. The first space is located not inside any of the vacuum vessels 26a and 26b, the link mechanism case 94, and the support insulator 22 but inside the tank 1. The second spaces are located inside the vacuum vessels 26a and 26b and outside the bellows 25a and 25b. The third space communicates with each of the spaces inside the bellows 25a and 25b, the space inside the link mechanism case 94, and the space inside the support insulator 22. The second spaces are vacuum spaces. In addition, the first space and the third space are filled with insulating gas, and the pressure of the insulating gas filling the third space is lower than the pressure of the insulating gas filling the first space.

Operation of the vacuum circuit breaker 50 will be described. When a cutoff command is input to the operating device 70 while the vacuum valves 4a and 4b are in the closed state, the insulating rod 12 moves downward, which is a direction in which the insulating rod 12 is pulled out of the tank 1. Since the lower end portion 901 of the first link 90 is rotatably fixed to the upper end portion 121 of the insulating rod 12, when the insulating rod 12 moves downward, the first link 90 also moves downward. Since the lower end portions 911a and 911b of the operation levers 91a and 91b are rotatably fixed to the upper end portion 902 of the first link 90, when the first link 90 moves downward, the lower end portions 911a and 911b of the operation levers 91a and 91b also move downward, respectively.

As the lower end portion 911a of the operation lever 91a moves downward, the operation lever 91a rotates about the shaft portion 913a. As a result, the upper end portion 912a of the operation lever 91a moves in a direction away from the vacuum vessel 26a. As the upper end portion 912a of the operation lever 91a moves in the direction away from the vacuum vessel 26a, the second link 92a, the shaft portion 433a, and the slider portion 432a also move in the direction away from the vacuum vessel 26a. As a result, the movable lead 11a moves in a direction in which the movable lead 11a is pulled out of the vacuum vessel 26a. As the movable lead 11a moves in the direction in which the movable lead 11a is pulled out of the vacuum vessel 26a, the movable electrode 41a is separated from the fixed electrode 42a to put the vacuum valve 4a into the cutoff state.

Similarly, as the lower end portion 911b of the operation lever 91b moves downward, the operation lever 91b rotates about the shaft portion 913b. As a result, the upper end portion 912b of the operation lever 91b moves in a direction away from the vacuum vessel 26b. As the upper end portion 912b of the operation lever 91b moves in the direction away from the vacuum vessel 26b, the second link 92b, the shaft portion 433b, and the slider portion 432b also move in the direction away from the vacuum vessel 26b. As a result, the movable lead 11b moves in a direction in which the movable lead 11b is pulled out of the vacuum vessel 26b. As the movable lead 11b moves in the direction in which the movable lead 11b is pulled out of the vacuum vessel 26b, the movable electrode 41b is separated from the fixed electrode 42b to put the vacuum valve 4b into the cutoff state.

When a closing command is input to the operating device 70 while the vacuum valves 4a and 4b are in the cutoff state, the insulating rod 12 moves upward, which is a direction in which the insulating rod 12 is pushed into the tank 1. Since the lower end portion 901 of the first link 90 is rotatably fixed to the upper end portion 121 of the insulating rod 12, when the insulating rod 12 moves upward, the first link 90 also moves upward. Since the lower end portions 911a and 911b of the operation levers 91a and 91b are rotatably fixed to the upper end portion 902 of the first link 90, when the first link 90 moves upward, the lower end portions 911a and 911b of the operation levers 91a and 91b also move upward, respectively.

As the lower end portion 911a of the operation lever 91a moves upward, the operation lever 91a rotates about the shaft portion 913a. As a result, the upper end portion 912a of the operation lever 91a moves in a direction of approaching the vacuum vessel 26a. As the upper end portion 912a of the operation lever 91a moves in the direction of approaching the vacuum vessel 26a, the second link 92a, the shaft portion 433a, and the slider portion 432a also move in the direction of approaching the vacuum vessel 26a. As a result, the movable lead 11a moves in a direction in which the movable lead 11a is pushed into the vacuum vessel 26a. As the movable lead 11a moves in the direction in which the movable lead 11a is pushed into the vacuum vessel 26a, the movable electrode 41a comes into contact with the fixed electrode 42a to put the vacuum valve 4a into the closed state. In the closed state, the slider portion 432a of the contact 43a is biased toward the vacuum vessel 26a by the contact pressure spring 435a. Therefore, a state in which the movable electrode 41a is pressed against the fixed electrode 42a is maintained in the closed state.

Similarly, as the lower end portion 911b of the operation lever 91b moves upward, the operation lever 91b rotates about the shaft portion 913b. As a result, the upper end portion 912b of the operation lever 91b moves in a direction of approaching the vacuum vessel 26b. As the upper end portion 912b of the operation lever 91b moves in the direction of approaching the vacuum vessel 26b, the second link 92b, the shaft portion 433b, and the slider portion 432b also move in the direction of approaching the vacuum vessel 26b. As a result, the movable lead 11b moves in a direction in which the movable lead 11b is pushed into the vacuum vessel 26b. As the movable lead 11b moves in the direction in which the movable lead 11b is pushed into the vacuum vessel 26b, the movable electrode 41b comes into contact with the fixed electrode 42b to put the vacuum valve 4b into the closed state. In the closed state, the slider portion 432b of the contact 43b is biased toward the vacuum vessel 26b by the contact pressure spring 435b. Therefore, a state in which the movable electrode 41b is pressed against the fixed electrode 42b is maintained in the closed state.

In the vacuum circuit breaker 50 according to the first embodiment, the pressure of insulating gas filling the third space is lower than the pressure of insulating gas filling the first space. Therefore, a difference in pressure between the inside and outside of the bellows 25a and 25b is small and the durability of the bellows 25a and 25b is improved as compared with a vacuum circuit breaker in which the pressure of insulating gas filling the third space is the same as the pressure of insulating gas in the space inside the tank and outside the vacuum vessel.

Furthermore, since the support insulator 22, the inside of which forms the third space, is lighter than the arc-extinguishing chamber 23 including the vacuum valves 4a and 4b and the link mechanism 9, the vacuum circuit breaker 50 according to the first embodiment in which the support insulator 22 is placed above the link mechanism case 94 has a lower center of gravity than a vacuum circuit breaker having a structure in which a support insulator is placed below a link mechanism case. Therefore, the vacuum circuit breaker 50 according to the first embodiment achieves higher aseismic performance than a vacuum circuit breaker having a structure in which a support insulator is placed below a link mechanism case.

As described above, the vacuum circuit breaker 50 according to the first embodiment can achieve both improvement in aseismic performance and improvement in durability of the bellows 25a and 25b.

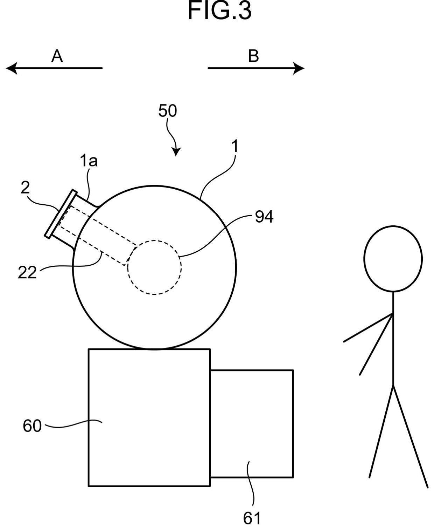

Note that the vacuum circuit breaker 50 having a structure in which the support insulator 22 is placed immediately above the link mechanism case 94 has been described here, but the support insulator 22 may be placed in such a way as to extend from the link mechanism case 94 horizontally or upward with respect to the horizontal. FIG. 3 is a schematic diagram of a vacuum circuit breaker according to a modification of the first embodiment. By placing the support insulator 22 in such a way as to extend from the link mechanism case 94 horizontally or upward with respect to the horizontal, it is possible to dispose the support insulator 22 at a lower position than in a case where the support insulator 22 is placed immediately above the link mechanism case 94. As a result, it is possible to lower the position of the center of gravity of the vacuum circuit breaker 50. In addition, when insulating gas leaks from the hatch 1a, the leaking insulating gas jets out horizontally or upward with respect to the horizontal since the support insulator 22 is placed in such a way as to extend from the link mechanism case 94 horizontally or upward with respect to the horizontal. Thus, even when insulating gas leaks from the hatch 1a, it is possible to prevent a worker from being exposed to the insulating gas leaking from the hatch 1a. Note that a direction indicated by arrow A in FIG. 3, in which the door 61 of the operation box 60 is opened, is set to a direction opposite to a horizontal component of a direction indicated by arrow B in FIG. 3, in which the support insulator 22 extends from the link mechanism case 94, so that it is possible to prevent a worker who performs maintenance of the operating device 70 from hitting his/her head on the hatch 1a.

### Second Embodiment.

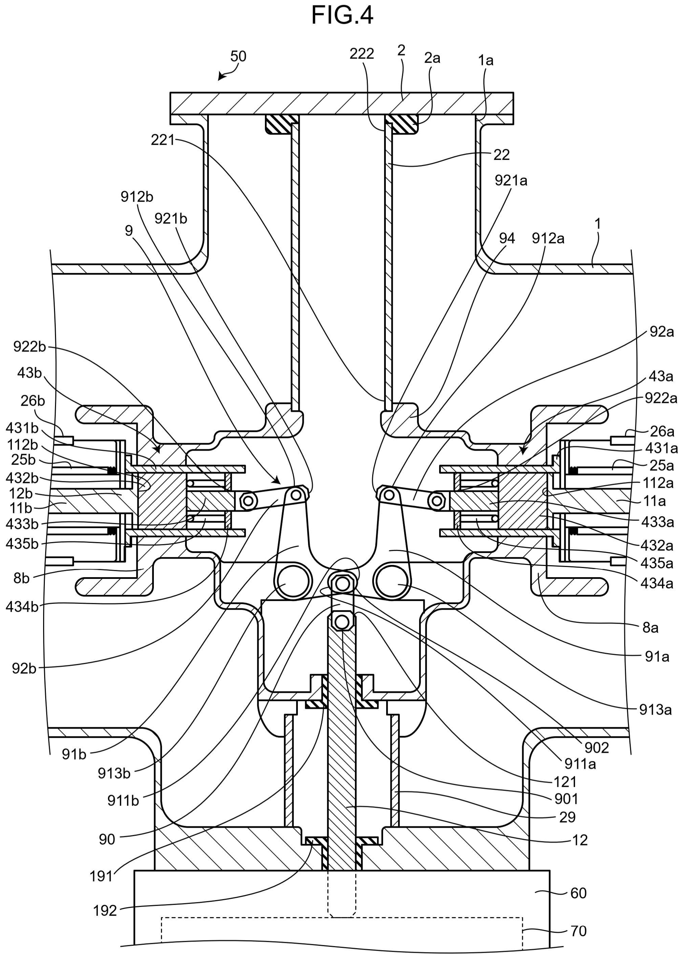

FIG. 4 is an enlarged partial cross-sectional view of a vacuum circuit breaker according to a second embodiment. Note that FIG. 4 illustrates cross sections of the tank 1 and constituent elements disposed inside the tank 1. The vacuum circuit breaker 50 according to the second embodiment is different from the vacuum circuit breaker 50 according to the first embodiment in that a reinforcing support insulator 29 is placed below the link mechanism case 94. The reinforcing support insulator 29 connects link mechanism case 94 and the tank 1 to support the arc-extinguishing chamber 23 from below. Except for this point, the vacuum circuit breaker 50 according to the second embodiment is the same as the vacuum circuit breaker 50 according to the first embodiment.

In the vacuum circuit breaker 50 according to the second embodiment, the arc-extinguishing chamber 23 is supported from above and below by the support insulator 22 and the reinforcing support insulator 29, respectively. Therefore, the position of the arc-extinguishing chamber 23 is less likely to vary than in the vacuum circuit breaker 50 according to the first embodiment. Therefore, the vacuum circuit breaker 50 according to the second embodiment can improve aseismic performance as compared with the vacuum circuit breaker 50 according to the first embodiment.

### Third Embodiment.

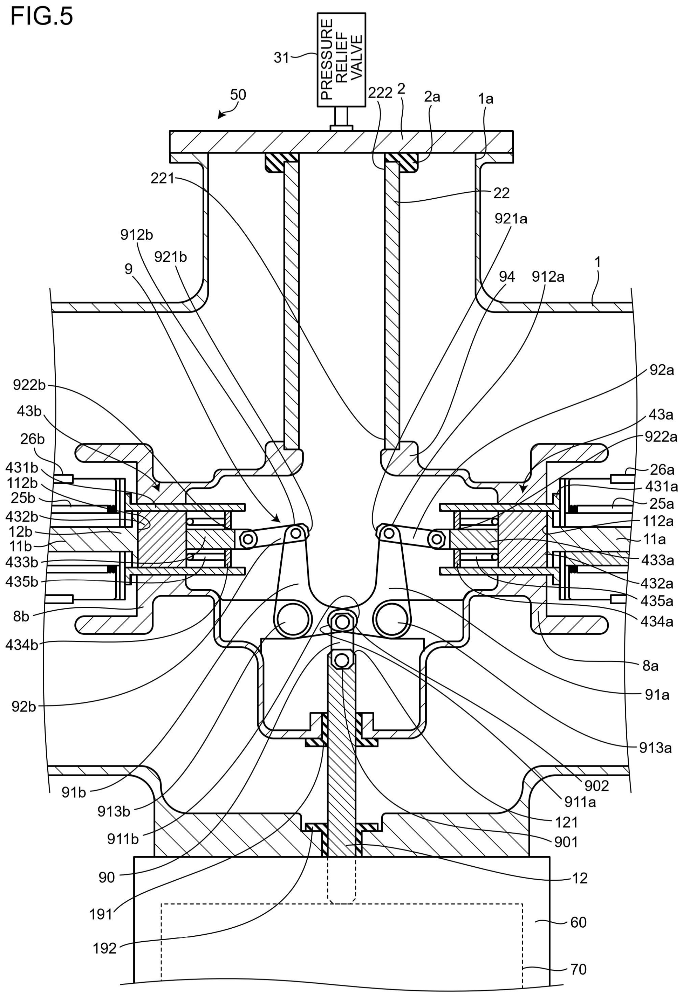

FIG. 5 is an enlarged partial cross-sectional view of a vacuum circuit breaker according to a third embodiment. Note that FIG. 5 illustrates cross sections of the tank 1 and constituent elements disposed inside the tank 1. The vacuum circuit breaker 50 according to the third embodiment is different from the vacuum circuit breaker 50 according to the first embodiment in that a pressure relief valve 31 is placed at a part of the cap 2, the part closing an opening in the opposite end portion 222 of the support insulator 22. Except for this point, the vacuum circuit breaker 50 according to the third embodiment is the same as the vacuum circuit breaker 50 according to the first embodiment.

Since the pressure relief valve 31 is placed at the part of the cap 2, the part closing the opening in the opposite end portion 222 of the support insulator 22, even when an arc is generated inside the third space to increase pressure in the third space, insulating gas inside the third space can be released from the pressure relief valve 31 to lower the pressure in the third space. Therefore, even when an arc is generated inside the third space to increase the pressure in the third space, the cap 2 is not broken. Thus, it is possible to prevent insulating gas in the first space from flowing out of the hatch 1a due to breakage of the cap 2.

The configurations set forth in the above embodiments show examples of the subject matter, and it is possible to combine the configurations with another known technique, and is also possible to partially omit or change the configurations without departing from the scope of the present disclosure.

### Reference Signs List

1 tank; 1a hatch; 2 cap; 2a packing; 3a, 3b side plate; 4a, 4b vacuum valve; 8a, 8b movable-side frame; 9 link mechanism; 11a, 11b movable lead; 12 insulating rod; 13a, 13b fixed lead; 15a, 15b fixed-side frame; 21a, 21b outer conductor; 22 support insulator; 23 arc-extinguishing chamber; 25a, 25b bellows; 26a, 26b vacuum vessel; 29 reinforcing support insulator; 31 pressure relief valve; 40 support structure; 41a, 41b movable electrode; 42a, 42b fixed electrode; 43a, 43b contact; 50 vacuum circuit breaker; 60 operation box; 61 door; 70 operating device; 90 first link; 91a, 91b operation lever; 92a, 92b second link; 94 link mechanism case; 111a, 111b, 131a, 131b, 221, 921a, 921b one end portion; 121, 902, 912a, 912b upper end portion; 191, 192 seal member; 211a, 211b, 901, 911a, 911b lower end portion; 112a, 112b, 222, 922a, 922b opposite end portion; 261a, 261b one end face; 431a, 431b guide cylindrical portion; 432a, 432b slider portion; 433a, 433b, 913a, 913b shaft portion; 434a, 434b contact pressure plate; 435a, 435b contact pressure spring.

## Claims

1. A vacuum circuit breaker comprising:
an arc-extinguishing chamber including two vacuum valves, a link mechanism, and a link mechanism case, the link mechanism transmitting a driving force to each of the vacuum valves, the driving force being received from an operating device, the link mechanism case covering the link mechanism;
a tank having a cylindrical shape, the tank housing the arc-extinguishing chamber; and
a support insulator having a cylindrical shape, the support insulator supporting the arc-extinguishing chamber in the tank, one end portion of the support insulator being fixed to the link mechanism case, wherein
each of the two vacuum valves includes a movable electrode, a fixed electrode, a vacuum vessel, a movable lead, and a bellows, the vacuum vessel housing the movable electrode and the fixed electrode, the movable electrode being placed at one end portion of the movable lead, an opposite end portion of the movable lead protruding outside the vacuum vessel from one end portion of the vacuum vessel, the bellows having a pleated cylindrical shape, the bellows being capable of being expanded and contracted, the bellows connecting the one end portion of the vacuum vessel and the movable lead,
a space inside the tank is divided into a first space, second spaces, and a third space, the first space being located not inside any of the vacuum vessels, the link mechanism case, and the support insulator but inside the tank, the second spaces being spaces inside the vacuum vessels and outside the bellows, the third space communicating with each of spaces inside the bellows, a space inside the link mechanism case, and a space inside the support insulator,
the first space is filled with insulating gas,
the second spaces are vacuum spaces,
the third space is filled with the insulating gas at a gas pressure lower than a gas pressure in the first space, and
the support insulator is placed in such a way as to extend from the link mechanism case horizontally or upward with respect to a horizontal.

2. The vacuum circuit breaker according to claim 1, wherein
the tank includes a hatch that is a protruding portion having an opening provided in a longitudinal center,
the opening of the hatch is closed by a cap, and
an opposite end portion of the support insulator is fixed to the cap such that an opening in the opposite end portion is closed by the cap.

3. The vacuum circuit breaker according to claim 2, wherein a pressure relief valve is provided at a part of the cap, the part closing the opening in the opposite end portion of the support insulator.

4. The vacuum circuit breaker according to claim 3, wherein the operating device is housed in an operation box and installed below the tank, and a seal member is placed between the tank and the operation box.

5. The vacuum circuit breaker according to claim 4, wherein a direction in which a door of the operation box opens is opposite to a horizontal component of a direction in which the support insulator extends from the link mechanism case.

6. The vacuum circuit breaker according to claim 1, comprising: a reinforcing support insulator located below the link mechanism case, the reinforcing support insulator connecting the link mechanism case and the tank to support the arc-extinguishing chamber.
